# EUROPÄISCHE PATENTSCHRIFT

(11) **EP 2 082 945 B1**
(45) Veröffentlichungstag und Bekanntmachung des Hinweises auf die Patenterteilung: **23.03.2011**
(21) Anmeldenummer: 08001421.0
(22) Anmeldetag: 25.01.2008
(51) Int. Cl.: B62D 5/04

(54) **Verfahren zum Erzeugen eines Rückführdrehmoment-Signals**
Method for generating a restoring moment signal
Procédé pour générer un signal de couple de retour

(43) Veröffentlichungstag der Anmeldung: 29.07.2009
(73) Patentinhaber: GM Global Technology Operations, Inc., Detroit, MI 48265-3000 (US)
(72) Erfinder: Moeller, Bertram, 55294 Bodenheim (DE)
(74) Vertreter: Manitz, Finsterwald & Partner GbR

(56) Entgegenhaltungen:
- EP-A- 1 243 496
- EP-A- 1 538 065
- EP-A- 1 767 433
- EP-A- 1 808 358
- US-A1- 2002 060 538
- US-A1- 2006 000 663

## Beschreibung

Die vorliegende Erfindung betrifft ein Verfahren zum Erzeugen eines Rückführdrehmoment-Signals bei einem insbesondere elektrischen Lenkhilfesystem eines Fahrzeugs.

Bei Fahrzeugen, die mit einem Lenkhilfesystem, wie z.B. einer elektrischen Servolenkung, ausgestattet sind, wird auf der Grundlage eines vom Fahrer auf das Lenkrad ausgeübten Drehmoments ein Unterstützungsdrehmoment erzeugt, welches den zum Lenken erforderlichen Kraftaufwand herabsetzt und somit den Fahrkomfort erhöht. Das Unterstützungsdrehmoment kann mit einem Rückführdrehmoment überlagert werden, welches dazu dient, die natürliche Rückstellbewegung der Räder in Richtung geradeaus weisender Neutralstellung zu unterstützen und somit das Halten der Spur während der Fahrt zu erleichtern. Der Betrag des Rückführdrehmoments wird üblicherweise durch ein Rückführdrehmoment-Signal vorgegeben, das von einem Steuergerät erzeugt wird. Bei bekannten Lenkhilfesystemen wird das Rückführdrehmoment-Signal beispielsweise in Abhängigkeit der aktuellen Lenkradstellung und der aktuellen Fahrzeuggeschwindigkeit erzeugt.

Ein auf diese Weise bestimmtes Rückführdrehmoment kann jedoch in bestimmten Fahrsituationen unvorteilhaft sein. Wird das Fahrzeug beispielsweise während eines Rückstellvorgangs beschleunigt, so nimmt die natürliche Rückstellkraft zu und die Bewegung des Lenkrads in Richtung Neutralstellung kann unerwünscht schnell ansteigen. Umgekehrt kann das Rückführdrehmoment bei geringen Geschwindigkeiten zu gering sein, um die Rückstellbewegung aufrechtzuerhalten oder in Gang zu setzen. Ferner ist bei kleinen Lenkwinkeln üblicherweise ein hohes Rückführdrehmoment nötig, da hier die Selbstrückstellkraft gering ist. Wenn der Fahrer jedoch in diesem Bereich um die Neutralstellung Lenkmanöver durchführt, so kann ein starres Lenkgefühl oder eine unerwünscht schnelle Rückstellbewegung des Lenkrads auftreten. Die US 2002/0060538A1 offenbart ein Verfahren gemäß dem Oberbegriff des Anspruchs 1.

Aufgabe der Erfindung ist es, ein besser angepasstes Rückführdrehmoment-Signal zu erzeugen, um die genannten Nachteile zu beseitigen.

Die Lösung dieser Aufgabe erfolgt durch ein Verfahren zum Erzeugen eines Rückführdrehmoment-Signals mit den Merkmalen des Anspruchs 1. Es wird eine aktuelle Lenkrad-Drehgeschwindigkeit ermittelt, ein von der Lenkrad-Drehgeschwindigkeit abhängiger Skalierungsfaktor wird ermittelt und das Rückführdrehmoment-Signal wird mit dem Skalierungsfaktor multipliziert, um ein modifiziertes Rückführdrehmoment-Signal zu erhalten.

Durch die Berücksichtigung der Lenkrad-Drehgeschwindigkeit beim Erzeugen des Rückführdrehmoment-Signals kann der Konflikt zwischen unzureichender Rückführung bei geringen Lenkradgeschwindigkeiten und zu starker Rückstellung bei hohen Lenkradgeschwindigkeiten aufgelöst werden. Dadurch ist es möglich, den besonderen Erfordernissen unterschiedlicher Fahrsituationen Rechnung zu tragen und somit den Fahrkomfort zu verbessern.

Mögliche Weiterbildungen der Erfindung sind in den abhängigen Ansprüchen, der Zeichnung sowie der Beschreibung angegeben. Nicht erfindungsgemäß wird der Skalierungsfaktor auf Grundlage einer Abhängigkeit von der Lenkrad-Drehgeschwindigkeit ermittelt, die durch einen stetigen und monoton fallenden Funktionszusammenhang gegeben ist. Das Rückführdrehmoment-Signal wird also bei sich ändernder Lenkrad-Drehgeschwindigkeit gleichmäßig modifiziert, um ein ruckfreies Lenkgefühl zu gewährleisten. Ferner ist ein derartig ermittelter Skalierungsfaktor bei hohen Lenkrad-Drehgeschwindigkeiten geringer als bei niedrigen Lenkrad-Drehgeschwindigkeiten. Bei geringen Lenkrad-Drehgeschwindigkeiten wird somit das zur Rückführung notwendige hohe Rückführdrehmoment ausgegeben, während gleichzeitig eine unerwünscht hohe Rückstellkraft oder eine unerwünscht schnelle Rückstellbewegung bei hohen Lenkrad-Drehgeschwindigkeiten vermieden wird.

Nicht erfindungsgemäß wird der Skalierungsfaktor auf Grundlage einer abschnittsweise linearen Abhängigkeit von der Lenkrad-Drehgeschwindigkeit ermittelt. Eine abschnittsweise lineare Abhängigkeit lässt sich auf besonders einfache und zuverlässige Weise in einer Steuerung implementieren, da keine komplexen Berechnungen notwendig sind.

Bevorzugt wird der Skalierungsfaktor auf einen konstanten Wert gesetzt, wenn die Lenkrad-Drehgeschwindigkeit geringer ist als ein erster Schwellenwert. Besonders bevorzugt wird der Skalierungsfaktor in diesem Fall auf etwa 1 gesetzt. Bei Lenkrad-Drehgeschwindigkeiten, die derart gering sind, dass das der Erfindung zugrunde liegende Problem der unerwünscht hohen Rückstellkraft nicht auftreten kann, wird somit auf eine unnötige Modifizierung des Rückführdrehmoment-Signals verzichtet. Vorzugsweise wird der Skalierungsfaktor bei einer vorbestimmten maximalen Lenkrad-Drehgeschwindigkeit auf etwa 0 gesetzt. Das bedeutet, dass ab einer bestimmten Lenkrad-Drehgeschwindigkeit kein Rückführdrehmoment ausgegeben wird und somit beispielsweise ein offensives Fahrmanöver nicht durch das Rückführdrehmoment beeinflusst wird.

Erfindungsgemäß wird der Skalierungsfaktor auf Grundlage einer ersten linearen Abhängigkeit von der Lenkrad-Drehgeschwindigkeit ermittelt, wenn die Lenkrad-Drehgeschwindigkeit höher ist als ein erster Schwellenwert und geringer als ein zweiter Schwellenwert. Zwischen dem ersten und dem zweiten Schwellenwert kann beispielsweise derjenige Bereich liegen, der für die Anpassung des Rückführdrehmoment-Signals besonders relevant ist. Innerhalb dieses Bereichs findet somit eine proportionale Anpassung statt.

Erfindungsgemäß wird der Skalierungsfaktor auf Grundlage einer zweiten, von der ersten Abhängigkeit verschiedenen linearen Abhängigkeit ermittelt, wenn die Lenkrad-Drehgeschwindigkeit höher ist als der zweite Schwellenwert. Die geschwindigkeitsabhängige Modifizierung des Rückführdrehmoments kann dadurch feiner abgestuft und somit genauer angepasst werden.

Erfindungsgemäß werden die erste Abhängigkeit und die zweite Abhängigkeit derart vorgegeben, dass die erste Abhängigkeit durch eine größere Steigung gekennzeichnet ist als die zweite Abhängigkeit. In dem Bereich hoher Lenkrad-Drehgeschwindigkeiten, in welchem ohnehin nur ein relativ geringes Rückführdrehmoment ausgegeben wird, kann somit eine sanftere Modifizierung erfolgen.

Bevorzugt wird der erste Schwellenwert mit einem Betrag zwischen 70 und 110°/s vorgegeben und der zweite Schwellenwert wird mit einem Betrag zwischen 240 und 300°/s vorgegeben. Eine Abstufung der Rückführdrehmoment-Modifizierung auf Grundlage dieser Bereichseinteilung hat sich als besonders zweckmäßig erwiesen.

Die Lösung der Aufgabe erfolgt ferner durch ein Lenkhilfesystem, das zur Durchführung eines erfindungsgemäßen Verfahrens ausgebildet ist.

Die Erfindung wird im Folgenden beispielhaft unter Bezugnahme auf die Zeichnungen beschrieben. Es zeigen:
- Fig. 1: ein schematisches Blockschaltbild einer Lenkhilfe- Steuerung, welche das erfindungsgemäße Verfahren ausführt; und
- Fig. 2: ein Diagramm, das eine beispielhafte Abhängigkeit des Skalierungsfaktors von der Lenkrad-Drehgeschwindig- keit darstellt.

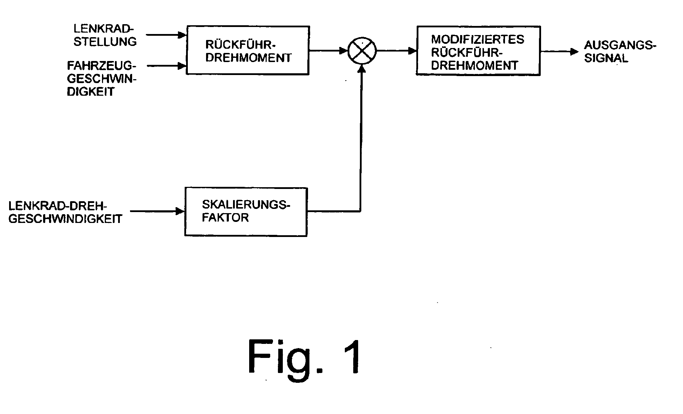

Das in Fig. 1 schematisch dargestellte Verfahren kann beispielsweise in dem Steuergerät eines elektrischen Lenkhilfesystem eines Kraftfahrzeugs ausgeführt werden, wie es aus dem Stand der Technik bekannt ist. Elektrische Lenkhilfesysteme stellen mittels eines mit dem Lenkgestänge gekoppelten Elektromotors oder eines anderen elektrischen Betätigungselements ein Lenkdrehmoment bereit. Der Betrag des Drehmoments wird anhand von Drehmomentsignalen ermittelt, die von dem Steuergerät erzeugt werden. Beispielsweise können ein Unterstützungsdrehoment-Signal, ein Dämpfungsdrehmoment-Signal und ein Rückführdrehmoment-Signal erzeugt werden, welche von dem Steuergerät überlagert werden, um ein Gesamt-Drehmomentausgangssignal zu erzeugen, das an den Elektromotor ausgegeben wird.

Das Steuergerät empfängt verschiedene Signale von Fahrzeugsensoren. Insbesondere sind an dem nicht dargestellten Fahrzeug Sensoren zur Messung der aktuellen Lenkradstellung, der aktuellen Fahrzeuggeschwindigkeit sowie der aktuellen Lenkrad-Drehgeschwindigkeit vorgesehen. Die Lenkrad-Drehgeschwindigkeit kann beispielsweise aus der zeitlichen Änderung der Lenkradstellung oder des Lenkwinkels ermittelt werden. Zusätzlich kann das Steuergerät auch weitere Eingaben empfangen, wie z.B. das vom Fahrer auf das Lenkrad ausgeübte Drehmoment.

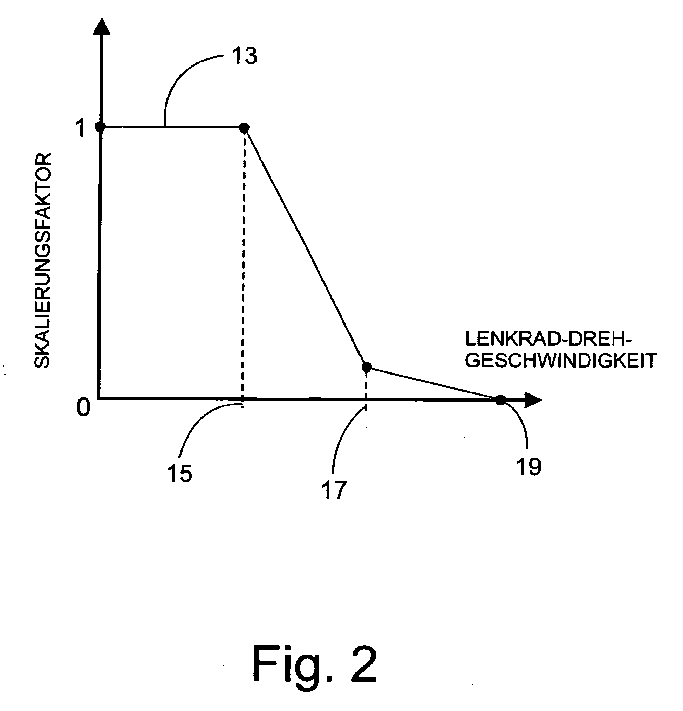

Ein Rückführdrehmoment-Signal wird in Abhängigkeit von der Lenkradstellung und der Fahrzeuggeschwindigkeit erzeugt. Das erzeugte Rückführdrehmoment-Signal wird auf Grundlage eines von der Lenkrad-Drehgeschwindigkeit abhängigen Skalierungsfaktors oder Multiplikators gemäß Fig. 1 modifiziert. Der Skalierungsfaktor wird auf der Grundlage einer speziellen Abhängigkeit ermittelt, die beispielhaft in dem Diagramm von Fig. 2 dargestellt ist. In dem Diagramm ist der Skalierungsfaktor in Abhängigkeit von der Lenkrad-Drehgeschwindigkeit aufgetragen. Es ist zu erkennen, dass die Abhängigkeit abschnittsweise linear ist, wobei ein um so niedrigerer Skalierungsfaktor gewählt wird, je höher die aktuelle Lenkrad-Drehgeschwindigkeit ist. Anstelle der dargestellten abschnittsweise linearen Abhängigkeit kann auch ein beliebiger anderer, vorzugsweise jedoch stetiger und monoton fallender Funktionszusammenhang gewählt werden. Auf der Abszisse des Diagramms ist ein erster Schwellenwert 15 und ein zweiter Schwellenwert 17 definiert. Ferner ist eine maximale Lenkrad-Drehgeschwindigkeit 19 definiert, die beispielsweise der oberen Grenze des Sensor-Messbereichs entsprechen kann.

Nach dem Ermitteln der aktuellen Lenkrad-Drehgeschwindigkeit überprüft die Steuerung, ob die Lenkrad-Drehgeschwindigkeit geringer ist als der erste Schwellenwert 15. Wenn die Lenkrad-Drehgeschwindigkeit geringer ist als der erste Schwellenwert 15, wird der Skalierungsfaktor auf den konstanten Wert 1 gesetzt. Anschließend prüft die Steuerung, ob die maximale Lenkrad-Drehgeschwindigkeit 19 erreicht ist. Falls dies der Fall ist, wird der Skalierungsfaktor auf 0 gesetzt. Wenn die Lenkrad-Drehgeschwindigkeit höher ist als der erste Schwellenwert 15, prüft die Steuerung, ob die Lenkrad-Drehgeschwindigkeit geringer ist als der zweite Schwellenwert 17. Wenn dies so ist, wird der Skalierungsfaktor auf Grundlage einer ersten linearen Abhängigkeit von der Lenkrad-Drehgeschwindigkeit ermittelt. Wenn die Lenkrad-Drehgeschwindigkeit höher ist als der zweite Schwellenwert 17, jedoch geringer als der Maximalwert 19, wird der Skalierungsfaktor auf Grundlage einer zweiten linearen Abhängigkeit ermittelt. In Fig. 2 ist zu erkennen, dass sich die erste lineare Abhängigkeit von der zweiten linearen Abhängigkeit unterscheidet. Insbesondere werden die beiden Abhängigkeiten derart vorgegeben, dass die erste Abhängigkeit durch eine größere Steigung gekennzeichnet ist als die zweite Abhängigkeit. Falls die Anwendung es erfordert, kann der Skalierungsfaktor alternativ auch bereits ab dem zweiten Schwellenwert 17 auf 0 gesetzt werden. Ebenso ist es vorstellbar, dass der Skalierungsfaktor bei Erreichen der maximalen Lenkrad-Drehgeschwindigkeit 19 nicht auf 0, sondern auf einen vorbestimmten Minimalwert gesetzt wird. Ein vorteilhafter Betrag für den ersten Schwellenwert liegt bei etwa 100 °/s, während ein vorteilhafter Betrag für den zweiten Schwellenwert etwa 270 °/s beträgt. Diese Werte können jedoch in beliebiger Weise an die jeweiligen Fahrzeugeigenschaften oder einen gewählten Fahrbarkeitsmodus angepasst werden.

Die dargestellte abschnittsweise lineare Abhängigkeit des Skalierungsfaktors von der Lenkrad-Drehgeschwindigkeit ermöglicht eine besonders einfache Implementierung sowie eine schnelle Ausführung. Insbesondere ist die Abhängigkeit durch lediglich vier Punkte oder Stützstellen vollständig definiert. Diese Stützstellen können beispielsweise aus einer Nachschlagetabelle abgefragt werden, welche bei gewünschten Änderungen in Bezug auf das Lenkverhalten leicht zu aktualisieren ist. Sollte es jedoch in Bezug auf den konkreten Anwendungsfall erforderlich sein, so ist es problemlos möglich, die Abhängigkeit und somit die Rückführdrehmoment-Modifizierung in beliebiger Weise zu verfeinern, beispielsweise durch weitere zu definierende Abschnitte oder in Form einer kontinuierlichen Funktion mit beispielsweise sigmoidem Verlauf.

Insgesamt ermöglicht die Erfindung eine Verbesserung der Rückführunterstützungsfunktion von Lenkhilfesystemen, wobei insbesondere ein starres Lenkgefühl und eine zu schnelle Rückstelldrehung des Lenkrads vermieden werden.

### Bezugszeichenliste

- 13: konstanter Wert
- 15: erster Schwellenwert
- 17: zweiter Schwellenwert
- 19: maximale Lenkrad-Drehgeschwindigkeit

## Patentansprüche

1. Verfahren zum Erzeugen eines Rückführdrehmoment-Signals bei einem insbesondere elektrischen Lenkhilfesystem eines Fahrzeugs, mit den Schritten:
Ermitteln einer aktuellen Lenkradstellung;
Ermitteln einer aktuellen Fahrzeuggeschwindigkeit; und
Erzeugen eines Rückführdrehmoment-Signals in Abhängigkeit von der Lenkradstellung und der Fahrzeuggeschwindigkeit;
Ermitteln einer aktuellen Lenkrad-Drehgeschwindigkeit;
Ermitteln eines von der Lenkrad-Drehgeschwindigkeit abhängigen Skalierungsfaktors; und
Multiplizieren des Rückführdrehmoment-Signals mit dem Skalierungsfaktor, um ein modifiziertes Rückführdrehmoment-Signal zu erhalten;
**dadurch gekennzeichnet,**
**dass** der Skalierungsfaktor auf Grundlage einer ersten linearen Abhängigkeit von der Lenkrad-Drehgeschwindigkeit ermittelt wird, wenn die Lenkrad-Drehgeschwindigkeit höher ist als ein erster Schwellenwert (15) und geringer als ein zweiter Schwellenwert (17), dass der Skalierungsfaktor auf Grundlage einer zweiten, von der ersten Abhängigkeit verschiedenen linearen Abhängigkeit ermittelt wird, wenn die Lenkrad-Drehgeschwindigkeit höher ist als der zweite Schwellenwert (17), und
**dass** die erste Abhängigkeit und die zweite Abhängigkeit derart vorgegeben werden, dass die erste Abhängigkeit durch eine größere Steigung **gekennzeichnet** ist als die zweite Abhängigkeit.

2. Verfahren nach Anspruch 1,
**dadurch gekennzeichnet,**
**dass** der Skalierungsfaktor auf einen konstanten Wert (13) gesetzt wird, wenn die Lenkrad-Drehgeschwindigkeit geringer ist als der erste Schwellenwert (15).

3. Verfahren nach Anspruch 2,
**dadurch gekennzeichnet,**
**dass** der Skalierungsfaktor auf etwa 1 gesetzt wird

4. Verfahren nach einem der vorhergehenden Ansprüche,
**dadurch gekennzeichnet,**
**dass** der Skalierungsfaktor bei einer vorbestimmten maximalen Lenkrad-Drehgeschwindigkeit (19) auf etwa 0 gesetzt wird.

5. Verfahren nach einem der vorhergehenden Ansprüche,
**dadurch gekennzeichnet,**
**dass** der erste Schwellenwert (15) mit einem Betrag zwischen 70 und 110 Grad pro Sekunde vorgegeben wird.

6. Verfahren nach einem der vorhergehenden Ansprüche,
**dadurch gekennzeichnet,**
**dass** der zweite Schwellenwert (17) mit einem Betrag zwischen 240 und 300 Grad pro Sekunde vorgegeben wird.

7. Lenkhilfesystem, welches dazu ausgebildet ist, mittels eines mit einem Lenkgestänge gekoppelten Betätigungselements, insbesondere mittels eines Elektromotors, ein Lenkdrehmoment bereitzustellen, wobei das Lenkhilfesystem ein Steuergerät aufweist, welches dazu ausgebildet ist, ein Gesamt-Drehmomentausgangssignal zu erzeugen, das zur Bereitstellung des Lenkdrehmoments an das Betätigungselement ausgegeben und aus einer Überlagerung eines Unterstutzungsdrehmoment-Signals, eines Dämpfungsdrehmoment- Signals und eines Rückführdrehmoment-Signals erzeugt wird, wobei das Steuergerät zur Erzeugung des Unterstützungsdrehmoment- Signals und des Dämpfungsdrehmoment-Signals ausgebildet ist und wobei das Rückführdrehmoment-Signals nach dem Verfahren gemäß zumindest einem der vorhergehenden Ansprüche erzeugt ist.

## Claims

1. A method for generating a return torque signal in a steering assistance system of a vehicle, in particular an electrical steering assistance system, having the steps:
determining an actual steering wheel position;
determining an actual vehicle speed; and
generating a return torque signal in dependence on the steering wheel position and the vehicle speed;
determining an actual steering wheel speed of rotation;
determining a scaling factor dependent on the steering wheel speed of rotation; and
multiplying the return torque signal with the scaling factor in order to obtain a modified return torque signal,
**characterized in that**
the scaling factor is determined on the basis of a first linear dependency on the steering wheel speed of rotation when the steering wheel speed of rotation is higher than the first threshold value (15) and lower than a second threshold value (17); **in that** the scaling factor is determined on the basis of a second linear dependency different from the first dependency when the steering wheel speed of rotation is higher than the second threshold (17), and **in that** the first dependency and the second dependency are preset **in that** the first dependency is **characterized by** a greater slope than the first dependency.

2. A method in accordance with claim 1,
**characterized in that**
the scaling factor is set to a constant value (13) when the steering wheel speed of rotation is lower than the first threshold value (15).

3. A method in accordance with claim 2,
**characterized in that**
the scaling factor is set to approximately 1.

4. A method in accordance with any one of the preceding claims,
**characterized in that**
the scaling factor is set to approximately 0 for a predetermined maximum steering wheel speed of rotation (19).

5. A method in accordance with any one of the preceding claims,
**characterized in that**
the first threshold value (15) is preset with a magnitude between 70 and 110 degrees per second.

6. A method in accordance with any one of the preceding claims,
**characterized in that**
the second threshold value (17) is preset with a magnitude between 240 and 300 degrees per second.

7. A steering assistance system which is designed to make a steering torque available by means of an actuating element coupled to a steering bar, in particular by means of an electric motor, wherein the steering assistance system has a control apparatus which is designed to generate a total torque output signal which is transmitted to make available the steering torque to the actuating element and is generated by superimposing a torque assistance signal, a damping torque signal and a return torque signal, with the control apparatus being designed to generate the torque assistance signal and the torque damping signal and with the return torque signal being generated by the method in accordance with at least one of the preceding claims.

## Revendications

1. Procédé pour générer un signal de couple de retour dans un système de direction assistée, en particulier électrique, d'un véhicule, avec les étapes suivantes :
détermination d'une position actuelle du volant ;
détermination d'une vitesse actuelle du véhicule ; et
génération d'un signal de couple de retour en fonction de la position du volant et de la vitesse du véhicule ;
détermination d'une vitesse de rotation actuelle du volant ;
détermination d'un facteur d'échelle fonction de la vitesse de rotation du volant ; et
multiplication du signal de couple de retour avec le facteur d'échelle,
afin d'obtenir un signal modifié de couple de retour ;
**caractérisé en ce que**
le facteur d'échelle est déterminé en se basant sur une première dépendance linéaire de la vitesse de rotation du volant lorsque la vitesse de rotation du volant est supérieure à une première valeur seuil (15) et inférieure à une seconde valeur seuil (17),
**en ce que** le facteur d'échelle est déterminé en se basant sur une seconde dépendance linéaire différente de la première dépendance linéaire quand la vitesse de rotation du volant est supérieure à la seconde valeur seuil (17), et
**en ce que** la première dépendance et la seconde dépendance sont imposées de telle façon que la première dépendance est **caractérisée par** une pente plus forte que la seconde dépendance.

2. Procédé selon la revendication 1,
**caractérisé en ce que** le facteur d'échelle est fixé à une valeur constante (13) quand la vitesse de rotation du volant est inférieure à la première valeur seuil (15).

3. Procédé selon la revendication 2,
**caractérisé en ce que** le facteur d'échelle est fixé à environ 1.

4. Procédé selon l'une des revendications précédentes,
**caractérisé en ce que** le facteur d'échelle est fixé à environ 0 pour une vitesse de rotation maximale prédéterminée du volant (19).

5. Procédé selon l'une des revendications précédentes,
**caractérisé en ce que** la première valeur seuil (15) est imposée avec une valeur entre 70 et 110° par seconde.

6. Procédé selon l'une des revendications précédentes,
**caractérisé en ce que** la seconde valeur seuil (17) est imposée avec une valeur entre 240 et 300° par seconde.

7. Système de direction assistée, réalisé pour mettre à disposition un couple de direction au moyen d'un élément d'actionnement accouplé à une tringlerie de direction, en particulier au moyen d'un moteur électrique, dans lequel le système de direction assistée comprend un appareil de commande qui est réalisé pour générer un signal de sortie global de couple qui est fourni à l'élément d'actionnement pour mettre à disposition le couple de direction et qui est engendré à partir d'une superposition d'un signal de couple d'assistance, d'un signal de couple d'amortissement et d'un signal de couple de retour, dans lequel l'appareil de commande est réalisé pour générer le signal de couple d'assistance et le signal de couple d'amortissement, et dans lequel le signal de couple de retour est engendré selon le procédé de l'une au moins des revendications précédentes.
